# EUROPEAN PATENT SPECIFICATION

(11) **EP 1 398 763 B1**
(45) Date of publication and mention of the grant of the patent: **03.05.2006**
(21) Application number: 03254922.2
(22) Date of filing: 07.08.2003
(51) Int. Cl.: G11B 5/00, G11B 5/31, G11B 5/147, G11B 5/17

(54) **Heat sink for a magnetic recording head**
Kühlkörper für einen magnetischen Aufzeichnungskopf
Radiateur pour une tête d'enregistrement magnétique

(30) Priority: 08.08.2002 US 215230
(43) Date of publication of application: 17.03.2004
(73) Proprietor: Hitachi Global Storage Technologies Netherlands B.V., 1076 AZ Amsterdam (NL)
(72) Inventor: Gider, Savas, C/O Hitachi Global Storage T., San Jose, CA 95193 (US); Hsiao, Wenchein, c/o Hitachi Global Storage T., San Jose, CA 95193 (US); Nikitin, Vladimir, c/o Hitachi Global Storage Tech, San Jose, CA 95193 (US)
(74) Representative: Calderbank, Thomas Roger

(56) References cited:
- US-A- 5 793 578
- US-A1- 2003 039 067
- US-A1- 2003 048 578
- US-B1- 6 181 514
- US-B1- 6 381 094
- US-B1- 6 396 660

## Description

### BACKGROUND OF THE INVENTION

This invention relates generally to a magnetic recording head used in a disk drive, and more particularly to a magnetic recording head incorporating a heat sink.

Disk drives using magnetic recording of digital information store most of the information in contemporary computer systems. A disk drive has at least one rotating disk with discrete concentric tracks of data. Each disk drive also has at least one recording head typically having a separate write element and read element for writing and reading the data on the tracks. The recording head is constructed on a slider and the slider is attached to a suspension. The combination of the recording head, slider, and suspension is called a head gimbal assembly. In addition, there is an actuator which positions the recording head over the specific track of interest. The actuator first rotates to seek the track of interest and after positioning the recording head over the track, maintains the recording head in close registration to that track. The disk in a disk drive has a substrate and a magnetic layer on the substrate for magnetic recording. The slider carrying the recording head has a disk facing surface upon which an air bearing is constructed. The air bearing allows the slider to float on a cushion of air and to be positioned close to the disk surface. Alternatively, the slider surface facing the disk can be adapted for partial or continuous contact with the disk.

The recording head is formed from various metals and is separated from the body of the slider by a thin insulating layer. The value of the coefficient of thermal expansion of the materials in the recording head is generally higher than the corresponding value for the insulating layer or the slider. Therefore as the temperature of the recording head and slider is increased, the physical expansion is greater for the recording head than for the insulating layer or the slider. The rise in temperature is most noticeable during writing when write current is passed through the write element of the recording head. During writing, heat is generated in the coils by Joule heating, and in the magnetic portion of the yoke by Eddy current heating. Upon heating, the recording head may protrude several nanometers out of the air bearing surface of the slider toward the disk because of the mismatch in thermal expansion coefficients and higher temperature in the region close to the coil compared with the slider body.

The flying height of the slider above the disk surface is generally lower for each new family of disk drive products to facilitate achieving ever higher densities of recorded information. The required flying heights are now comparable with the amount of recording head protrusion caused by temperature increases during writing. Contact between the recording head and the disk can cause damage to the recording head and can also lead to wear failure at the interface between the recording head and the disk.

The alternate contact recording apparatus allows contact between the slider and the disk. However, while a slider surface may be constructed to allow partial or continuous contact with the disk, a recording head which protrudes from the disk facing surface of a slider is subject to excessive wear damage.

Thus, the mismatch between the thermal expansion coefficients of the recording head and the slider leading to protrusion of the recording head is an increasingly serious problem.

US-A-6 396 660 discloses a type of magnetic head with improved thermal characteristics. In the said head the read and write elements overlap, namely, a single layer forms both the lower pole of the write element and the upper shield of the read element.

In a preferred embodiment, the invention provides an effective heat sink for a recording head. The heat sink thus provided dissipates heat effectively and therefore limits the temperature excursions in the recording head. The present invention substantially improves the temperature induced protrusion of the recording head.

The features of the present invention are defined by the appended claims.

Advantages of the invention will become apparent from the following detailed description, which when taken in conjunction with the drawings, illustrate by way of example the principles of the invention.

In the drawings
Fig. 1 illustrates a top view of a disk drive having a recording head with a heat sink;
Fig. 2 illustrates a perspective view of a slider and a recording head with a heat sink;
Fig. 3 illustrates a cross sectional view of a recording head having a heat sink disposed between the write element and read element;
Fig. 4 illustrates a detailed cross sectional view of a recording head having a heat sink disposed between the write element and read element;
Fig. 5 illustrates a cross sectional view of a recording head wherein a heat sink is formed over the upper pole of the write element; and,
Fig. 6 illustrates a cross sectional view of a recording head having a heat sink disposed between the layers of the turns in a write element coil.

The invention is embodied in a heat sink which effectively dissipates heat from a recording head. The heat sink limits the temperature excursions of the recording head and therefore limits the amount of protrusion of the recording head from the disk facing surface of a slider. The risk of wear damage to the recording head and the risk of interface damage between the recording head and the disk is significantly reduced.

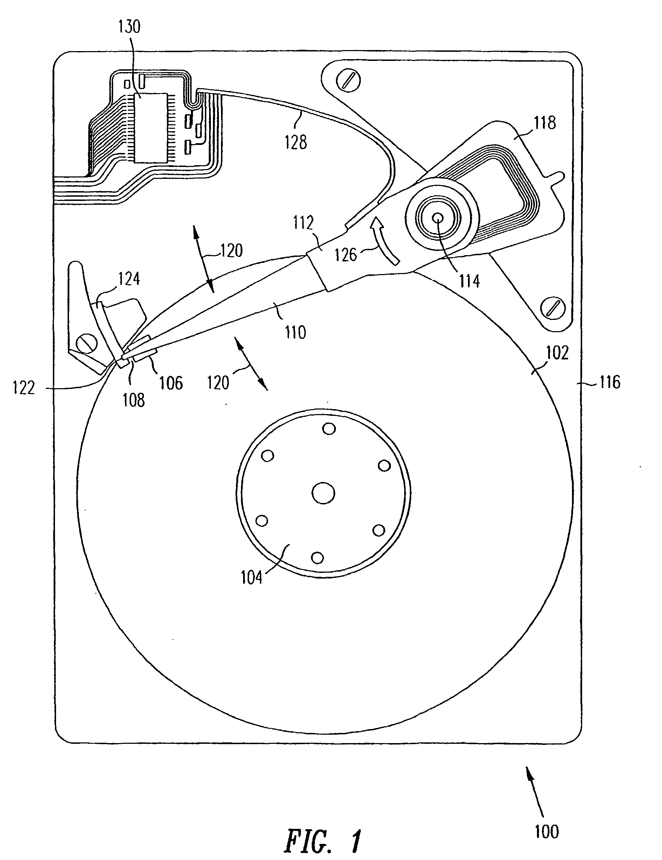

Referring to Fig. 1, a magnetic disk drive 100 has at least one rotatable magnetic disk 102 supported by a spindle 104 and rotated by a motor (not shown). There is at least one slider 106 with an attached recording head 108 and heat sink (described in detail below) positioned over the disk 102 surface while reading and writing. The slider 106 is attached to a suspension 110 and the suspension 110 is attached to an actuator 112. The actuator 112 is pivotally attached 114 to the housing 116 of the disk drive 100 and is driven by a voice coil motor 118. As the disk is rotating, the actuator 112 positions the slider 106 along with the suspension 110 radially or along an arcuate path 120 over the disk 102 surface to access the data track of interest.

Referring to Fig. 1, during operation of the disk drive 100, the motion of the rotating disk 102 relative to the slider 106 generates an air bearing between the slider 106 and the disk 102 surface which exerts an upward force on the slider 106. This upward force is balanced by a spring force from the suspension 110 urging the slider 106 toward the surface of the disk 102. Alternatively, the slider 106 may be in either partial or continuous contact with the disk 102 surface during operation.

Fig. 1 also shows an optional load/unload tab 122 on the distal end of the suspension 110. This load/unload tab 122 operates in conjunction with a load/unload fixture 124 to lift the slider 106 away from the disk 102 surface when the disk drive 100 is turned off or enters a power saving mode. When an unload operation is initiated, the actuator 112 rotates far enough in a clockwise direction 126 such that the load/unload tab 122 then slides up the load/unload fixture 124 gently lifting the slider 106 off of the disk 102 surface. Fig. 1 also shows the electrical connection 128 as wires or a flex cable between the recording head 108 and the preamplifier 130.

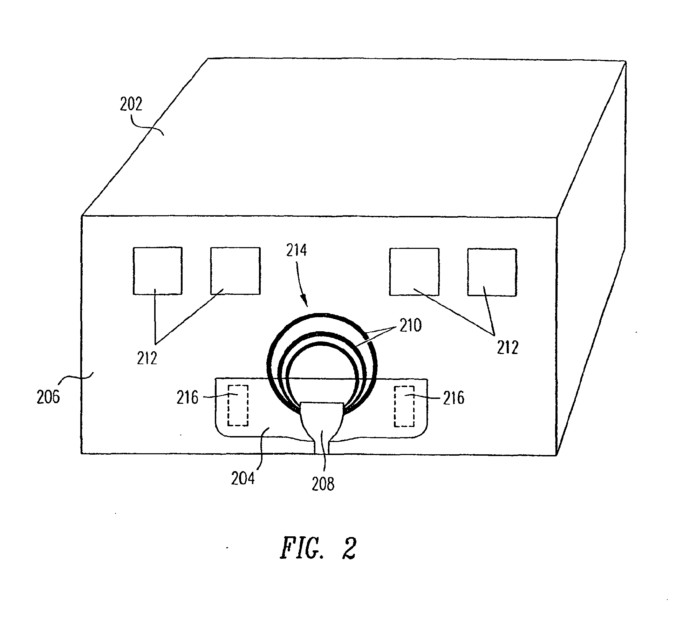

Fig. 2 shows a more detailed view of a slider 202. The recording head and heat sink 204 are preferably constructed on the trailing surface 206 of the slider 202. Fig. 2 illustrates the upper pole 208 and the turns 210 of the coil 214 of the write element of the recording head. The read element is not illustrated in Fig. 2. The electrical connection pads 212 which allow connection with the write element and read element are illustrated. One embodiment of a heat sink 204 is illustrated in Fig. 2. This embodiment of the heat sink is a layer of heat conductive material physically close enough to the coil 214 and at least one of the poles 208 of the write element to be effective in conducting heat away from the write element. A ceramic composite of titanium carbide and alumina is commonly used to form sliders. This material is a better heat conductor than the substantially pure alumina commonly used to separate the recording head from the slider. Thus, the heat-sink is somewhat more effective if a portion of the heat sink is in physical contact, or connected, with the slider. Fig. 2 illustrates two areas 216 of the heat sink conductive layer 204 which are in contact with the trailing surface 206 of the slider 202 through openings (described in more detail below) in the underlying insulation layer (not shown).

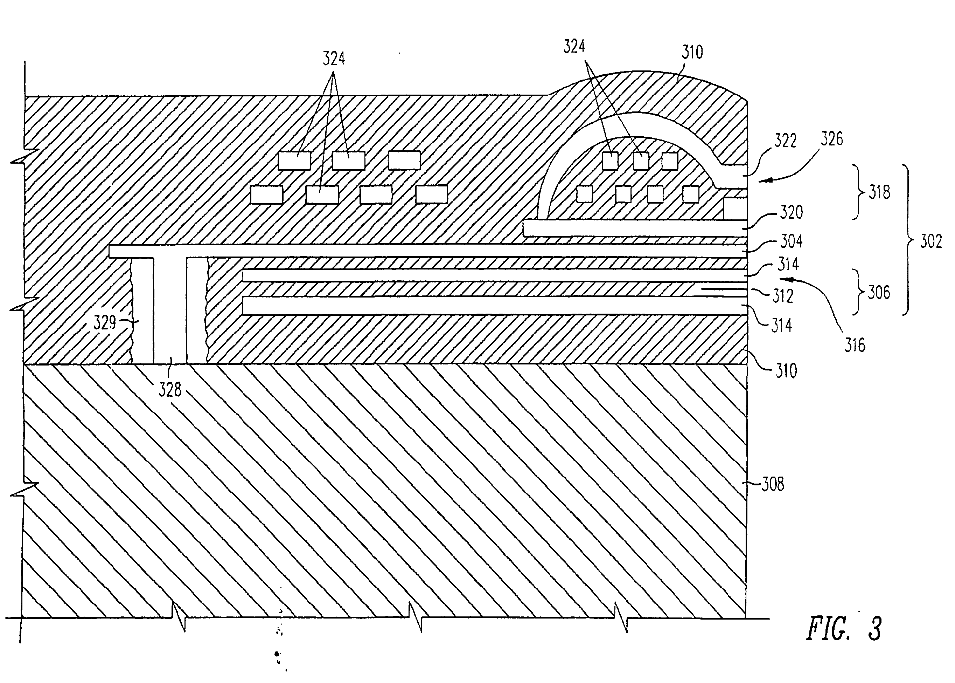

Fig. 3 illustrates a cross sectional view of a typical recording head 302 and one embodiment of a heat sink 304. The recording head 302 typically has a read element 306 which is separated from the slider body 308 by a layer 310 of insulating material. The read element 306 has a thin film sensor 312 and two magnetic shield layers 314. The read element 306 typically has an exposed end 316 for communicating with the disk (not shown). The write element 318 has a lower 320 and upper pole 322 and turns 324 forming a coil disposed between the poles 320, 322. The poles 320, 322 of the write element 318 have exposed ends 326 for communicating with the disk (not shown). Both the read element 306 and write element 318 are usually surrounded by insulation material except for the exposed ends 316, 326. There may be a very thin protective layer of carbon material formed over the exposed ends 316, 326 to retard corrosion of the write 318 and read 306 elements. A recording head with a thin carbon overcoat is considered to have exposed ends for purposes of magnetically communicating with the disk. The heat sink 304 in Fig. 3 is embodied as a layer of heat conducting material disposed between the read element 306 and the write element 318. One or more openings 329 in the insulation 310 allowing a portion 328 the heat conducting material of the heat sink 304 to be in contact with the slider 308 incrementally improves the heat conduction.

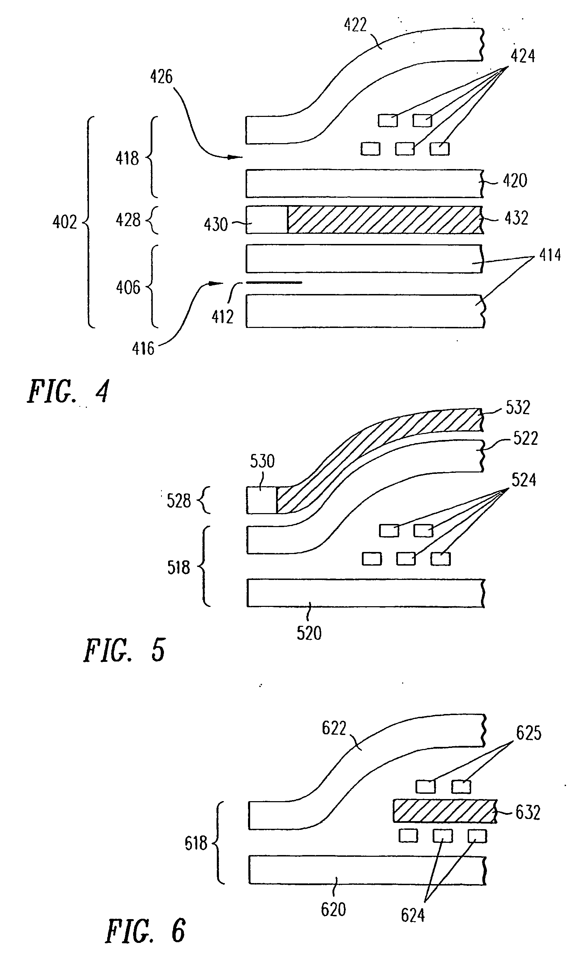

Fig. 4 illustrates an expanded view of a recording head 402 having an embodiment of a heat sink. The write element 418 of the recording head has an upper pole 422 and a lower pole 420. The write element 418 also has coil turns 424 and an exposed end 426 for communicating with the disk (not shown). The read element 406 has two shields 414, a read sensor 412, and an exposed end 416 for communicating with the disk (not shown). The heat sink illustrated in Fig. 4 is embodied as a layer 428 disposed between the write element 418 and read element 406. In the particular embodiment illustrated in Fig. 4, the heat sink layer 428 has one portion 432 composed of a heat conducting material, preferably with a high thermal conductivity, and another smaller portion 430 composed of an insulating material. The insulating portion 430 is positioned near the exposed ends of the write element 426 and read element 416. The insulating portion 430 of the heat sink, preferably formed of a stable insulator such as alumina, helps protect the heat conducting portion 426 from possible corrosion or wear.. Alternatively, the smaller portion 430 may be formed from a stable capping material such as permalloy or other alloy of nickel and iron.

Fig. 5 illustrates an alternative embodiment of a heat sink. In this embodiment, the heat sink is comprised of a layer 528 formed over the upper pole 522 of the write element 518. The heat sink layer 528 has a portion 532 formed from a heat conducting material and an optional portion 530 formed from an insulator. The lower pole 520 and the turns 524 of the write coil are illustrated.

The heat sink may be embodied as a heat conducting layer positioned adjacent to the turns in the write head coil. This configuration of the heat sink provides for an effective heat sink since a primary heat source is the heat generated in the coil during writing. Fig. 6. illustrates a specific embodiment of a heat sink which comprises a heat conducting layer 632 disposed between the turns 624, 625 of a two layer coil in a write element 618. The write element 618 has a lower pole 620 and an upper pole 622.

In the embodiments of the heat sink discussed above, the heat conducting material may be formed from any suitable material. Copper is a preferred heat conducting material because the heat conductivity is high and a copper layer is easily constructed by known methods of electroplating or vacuum deposition. The coil of the write element is usually formed from copper. Magnetic materials are not as suitable for use as heat conductors because of the possible interference with the function of the write or read elements. The optional insulating portion of the heat sink may conveniently be formed from alumina which is widely used in recording head construction as an insulator. Other insulating materials such as silicon oxide are known to those skilled in the art. The methods of forming the heat sink are well known to those skilled in the art and include forming a mask, plating, sputtering or other suitable techniques.

In numerical experiments simulating an increase in temperature due to writing, recording heads having a heat sink indicated a temperature increase as low as 70% compared with the temperature increase for recording heads which did not have a heat sink. Correspondingly, the temperature induced protrusion was reduced by up to 30% for recording heads having a heat sink compared with recording heads without a heat sink.

From the foregoing it is apparent that the invention provides an effective heat sink for a recording head. The embodiments of the heat sink significantly limit the increase in temperature of the recording head and significantly reduce the temperature induced recording head protrusion. Although this invention has been described with respect to specific embodiments, the details thereof are not to be construed as limitations for it will be apparent that various embodiments, changes, and modifications may be resorted to without departing from the scope thereof, and it is understood that such equivalent embodiments are intended to be included within the scope of this invention as defined by the appended claims.

## Claims

1. A magnetic recording head conjoined with the trailing surface of a slider comprising:
a write element (318, 418) having an upper pole (322, 422), a lower pole (320, 420) and a coil (324, 424) between the upper (322, 422) and lower (320, 420) poles, the upper (322, 422) and lower (320, 420) poles having an exposed end at the trailing surface of the slider;
a read element (306, 406) having a thin film sensor (312, 412) upper and lower shield layers (314, 414) on either side of the read element (306, 406) and an exposed end (316, 416) at the trailing surface of the slider; and
a heat sink (304, 428) between the lower pole (320, 420) of the write element (318, 418) and the upper shield layer of the read element (306, 406)

2. A magnetic recording head as in claim 1 wherein said heat sink (428) comprises a heat conductive portion (422) and an insulating portion (432), said insulating portion (430) extending to the exposed ends of the write element (418) and read element (406).

3. A magnetic recording head conjoined with the trailing surface of a slider comprising:
a write element (518) having an upper pole (522), a lower pole (520) and a coil (524) between the upper (522) and lower (520) poles, the upper (522) and lower (520) poles having an exposed end at the trailing surface of the slider;
a read element having a thin film sensor upper and lower shield layers on either side of the read element and an exposed end at the trailing surface of the slider; and
a heat sink (528) above the upper pole (522) of the write element (518),

4. A magnetic recording head as in claim 3 wherein said heat sink (528) comprises a layer having a heat conductive portion (532) and an insulating portion (530), said insulating portion (530), extending to the exposed ends of the upper and lower poles (522,520)

5. A magnetic recording head as in claim 2 or claim 4, the heat conductive portion of said heat sink is comprised of copper.

6. A magnetic recording head as in claim 2 or claim 4, wherein said insulating portion of said heat sink is comprised of alumina.

7. A magnetic recording head conjoined with the trailing surface of a slider comprising:
a write element (618) having an upper pole (622) a lower pole (620) and a coil (632) between the upper (622)and lower (620) poles, the upper (622) and lower (620) poles having an exposed end at the trailing surface of the slider;
a read element having a thin film sensor upper and lower shield layers on either side of the read element and an exposed end at the trailing surface of the slider; and
wherein the coil comprises a first layer of turns (624) over the lower pole (624) of the write element and a second layer of turns (625) over the first layer of turns (624); and
the head includes a heat sink (632) between the first (625) and second (624) layers of turns.

8. A magnetic recording head as in any one of the previous claims wherein a portion of said heat sink (304, 432) connected with the trailing surface of the slider.

9. A magnetic recording head as in any of the previous claims wherein said heat sink comprises a heat conductive layer.

10. A magnetic recording head as in claim 9 wherein said heat conductive layer extends to the exposed ends of said write and read elements.

11. A magnetic recording head as in any one of the previous claims, wherein said heat sink comprises copper.

12. A disk drive, comprising:
a disk;
a slider;
a magnetic recording head conjoined with said slider for magnetic recording on said disk, wherein said magnetic recording head is according to any one of the previous claims.

## Revendications

1. Tête d'enregistrement magnétique jointe à la surface arrière d'un curseur comprenant:
un élément d'écriture (318, 418) ayant un pôle supérieur (322, 422), un pôle inférieur (320, 420) et une bobine (324, 424) entre les pôles supérieur (322, 422) et inférieur (320, 420), les pôles supérieur (322, 422) et inférieur (320, 420) ayant une extrémité exposée à la surface arrière du curseur;
un élément de lecture (306, 406) ayant un capteur de film mince (312, 412), des couches de protection supérieure et inférieure (314, 414) de chaque côté de l'élément de lecture (306, 406) et une extrémité exposée (316, 416) à la surface arrière du curseur; et
un radiateur (304, 428) entre le pôle inférieur (320, 420) de l'élément d'écriture (318, 418) et la couche de protection supérieure de l'élément de lecture (306, 406).

2. Tête d'enregistrement magnétique selon la revendication 1, où ledit radiateur (428) comprend une portion conductrice de chaleur (422) et une portion isolante (432), ladite portion isolante (430) s'étendant aux extrémités exposées de l'élément d'écriture (418) et de l'élément de lecture (406).

3. Tête d'enregistrement magnétique jointe à la surface arrière d'un curseur comprenant:
un élément d'écriture (518) ayant un pôle supérieur (522), un pôle inférieur (520) et une bobine (524) entre les pôles supérieur (522) et inférieur (520), les pôles supérieur (522) et inférieur (520) ayant une extrémité exposée à la surface arrière du curseur;
un élément de lecture ayant un capteur de film mince, des couches de protection supérieure et inférieure de chaque côté de l'élément de lecture et une extrémité exposée à la surface arrière du curseur; et
un radiateur (528) au -dessus du pôle supérieur (522) de l'élément d'écriture (518).

4. Tête d'enregistrement magnétique selon la revendication 3, où ledit radiateur (528) comprend une couche ayant une portion conductrice de chaleur (532) et une portion isolante (530), ladite portion isolante (530) s'étendant aux extrémités exposées des pôles supérieur et inférieur (522, 520).

5. Tête d'enregistrement magnétique selon la revendication 2 ou la revendication 4, où la portion conductrice de chaleur dudit radiateur est réalisée en cuivre.

6. Tête d'enregistrement magnétique selon la revendication 2 ou la revendication 4, où ladite portion isolante dudit radiateur est réalisée en alumine.

7. Tête d'enregistrement magnétique jointe à la surface arrière d'un curseur comprenant:
un élément d'écriture (618) ayant un pôle supérieur (622), un pôle inférieur (620) et une bobine (632) entre les pôles supérieur (622) et inférieur (620), les pôles supérieur (622) et inférieur (620) ayant une extrémité exposée à la surface arrière du curseur;
un élément de lecture ayant un capteur de film mince, des couches de prote ction supérieure et inférieure de chaque côté de l'élément de lecture et une extrémité exposée à la surface arrière du curseur; et
où la bobine comprend une première couche de tours (624) sur le pôle inférieur (624) de l'élément d'écriture et une seconde couche de tours (625) sur la première couche de tours (624); et
la tête comprend un radiateur (632) entre les première (625) et seconde (624) couches de tours.

8. Tête d'enregistrement magnétique selon l'une des revendications précédentes, où une portion dudit radiateur (304, 432) est reliée à la surface arrière du curseur.

9. Tête d'enregistrement magnétique selon l'une des revendications précédentes, où ledit radiateur comprend une couche conductrice de chaleur.

10. Tête d'enregistrement magnétique selon la revendication 9, où ladite couche conductrice de chaleur s'étend aux extrémités exposées desdits éléments d'écriture et de lecture.

11. Tête d'enregistrement magnétique selon l'une des revendications précédentes, où ledit radiateur comprend du cuivre.

12. Mémoire à disque, comprenant:
un disque;
un curseur;
une tête d'enregistrement magnétique jointe audit curseur pour l'enregistrement magnétique sur ledit disque, où ladite tête d'enregistrement magnétique est réalisée selon l'une des revendications précédentes.

## Patentansprüche

1. Magnetaufzeichnungskopf, der mit der hinteren Oberfläche eines Gleitstücks verbunden ausgeführt ist und Folgendes umfasst:
ein Schreibelement (318, 418) mit einem oberen Pol (322, 422), einem unteren Pol (320, 420) und einer Spule (324, 424) zwischen dem oberen (322, 422) und dem unteren Pol (320, 420), wobei der obere (322, 422) und der untere (320, 420) Pol ein an der hinteren Oberfläche des Gleitstücks freiliegendes Ende aufweisen;
ein Leseelement (306, 406) mit einem Dünnschichtsensor (312, 412), einer oberen und einer unteren Abschirmungsschicht (314, 414) an beiden Seiten des Leseelements (306, 406) und einem an der hinteren Oberfläche des Gleitstücks freiliegenden Ende (316, 416); und
einen Kühlkörper (304, 428) zwischen dem unteren Pol (320, 420) des Schreibelements (318, 418) und der oberen Abschirmungsschicht des Leseelements (306, 406).

2. Magnetaufzeichnungskopf nach Anspruch 1, worin der Kühlkörper (428) einen wärmeleitenden Abschnitt (422) und einen Isolierabschnitt (432) umfasst, wobei sich der lsolierabschnitt (430) zu den freilegenden Enden des Schreibelements (418) und des Leseelements (406) erstreckt.

3. Magnetaufzeichnungskopf, der mit der hinteren Oberfläche eines Gleitstücks verbunden ausgeführt ist und Folgendes umfasst:
ein Schreibelement (518) mit einem oberen Pol (522), einem unteren Pol (520) und einer Spule (524) zwischen dem oberen (522) und dem unteren Pol (520), wobei der obere (522) und der untere (520) Pol ein an der hinteren Oberfläche des Gleitstücks freiliegendes Ende aufweisen;
ein Leseelement mit einem Dünnschichtsensor, einer oberen und einer unteren Abschirmungsschicht an beiden Seiten des Leseelements und einem an der hinteren Oberfläche des Gleitstücks freiliegenden Ende; und
einen Kühlkörper (528) oberhalb des oberen Pols (522) des Schreibelements (518).

4. Magnetaufzeichnungskopf nach Anspruch 3, worin der Kühlkörper (528) eine Schicht mit einem wärmeleitenden Abschnitt (532) und einem lsolierabschnitt (530) umfasst, wobei sich der Isolierabschnitt (530) zu den freiliegenden Enden des oberen und des unteren Pols (522, 520) erstreckt.

5. Magnetaufzeichnungskopf nach Anspruch 2 oder 4, worin der wärmeleitende Abschnitt des Kühlkörpers aus Kupfer besteht.

6. Magnetaufzeichnungskopf nach Anspruch 2 oder 4, worin der Isolierabschnitt des Kühlkörpers aus Aluminiumoxid besteht.

7. Magnetaufzeichnungskopf, der mit der hinteren Oberfläche eines Gleitstücks verbunden ausgeführt ist und Folgendes umfasst:
ein Schreibelement (618) mit einem oberen Pol (622), einem unteren Pol (620) und einer Spule (632) zwischen dem oberen (622) und dem unteren Pol (620), wobei der obere (622) und der untere (620) Pol ein an der hinteren Oberfläche des Gleitstücks freiliegendes Ende aufweisen;
ein Leseelement mit einem Dünnschichtsensor, einer oberen und einer unteren Abschirmungsschicht an beiden Seiten des Leseelements und einem an der hinteren Oberfläche des Gleitstücks freiliegenden Ende; und
worin die Spule eine erste Windungslage (624) über dem unteren Pol (624) des Schreibelements und eine zweite Windungslage (625) über der ersten Windungslage (624) umfasst; und
der Kopf einen Kühlkörper (632) zwischen der ersten (625) und der zweiten (624) Windungslage umfasst.

8. Magnetaufzeichnungskopf nach einem der vorangegangenen Ansprüche, worin ein Abschnitt des Kühlkörpers (304, 432) mit der hinteren Oberfläche des Gleitstücks verbunden ist.

9. Magnetaufzeichnungskopf nach einem der vorangegangenen Ansprüche, worin der Kühlkörper eine wärmeleitende Schicht umfasst.

10. Magnetaufzeichnungskopf nach Anspruch 9, worin sich die wärmeleitende Schicht zu den freiliegenden Enden des Schreib- und des Leseelements erstreckt.

11. Magnetaufzeichnungskopf nach einem der vorangegangenen Ansprüche, worin der Kühlkörper Kupfer umfasst.

12. Plattenlaufwerk, umfassend:
eine Platte;
ein Gleitstück;
einen Magnetaufzeichnungskopf, der zur Magnetaufzeichnung auf der Platte mit der hinteren Oberfläche eines Gleitstücks verbunden ausgeführt ist, worin der Magnetaufzeichnungskopf nach einem der vorangegangenen Ansprüche ausgeführt ist.
